# FASCICULE DE BREVET EUROPEEN

(11) **EP 1 084 164 B1**
(45) Date de publication et mention de la délivrance du brevet: **02.11.2006**
(21) Numéro de dépôt: 99920927.3
(22) Date de dépôt: 31.05.1999
(51) Int. Cl.: C08F 220/24, A62D 1/00

(54) **POLYMERES HYDROPHILES FLUORES**
FLUORIERTE HYDROPHILE POLYMERE
FLUORINATED HYDROPHILIC POLYMERS

(30) Priorité: 03.06.1998 FR 9806941
(43) Date de publication de la demande: 21.03.2001
(73) Titulaire: E.I. DU PONT DE NEMOURS AND COMPANY, Wilmington, DE 19898 (US)
(72) Inventeur: PABON, Martial, F-92400 Courbevoie (FR); MORILLON, Elisabeth, F-92400 Courbevoie (FR); CORPART, Jean-Marc, F-95110 Sannois (FR)
(74) Mandataire: Morf, Jan Stefan
(86) Numéro de dépôt international: PCT/FR1999/001236
(87) Numéro de publication internationale: WO 1999/062972

(56) Documents cités:
- EP-A- 0 846 709
- DE-A- 1 952 585
- US-A- 3 336 269
- US-A- 4 606 832

## Description

La présente invention concerne le domaine des polymères hydrophiles et a plus particulièrement pour objet des polymères hydrophiles fluorés obtenus par polymérisation radicalaire en milieu précipitant. Ces polymères abaissent la tension superficielle des solutions aqueuses ; ce sont de bons agents moussants et ils sont plus particulièrement intéressants en tant que dispersants, épaississants et en tant qu'additifs dans les émulseurs anti-incendies polyvalents.

Les polymères hydrophiles et plus particulièrement ceux à base d'acrylamide, de méthacrylamide ou de leurs dérivés N-substitués sont bien connus et largement utilisés industriellement. Très souvent, l'acrylamide, le méthacrytamide et leurs dérivés sont copolymérisés avec d'autres monomères hydrophiles porteurs de charges ioniques ou ionisables, anioniques ou cationiques, qui confèrent au polymère hydrophile des propriétés spécifiques adaptées à chaque application. Ces polymères sont couramment utilisés dans l'industrie papetière, dans le traitement des eaux et dans la métallurgie comme floculants de minerais; ils sont également utilisés comme agents épaississants dans de nombreuses formulations telles que l'impression textile et les produits cosmétiques.

Les méthodes les plus utilisées pour préparer ces polymères font appel aux milieux aqueux; tel est le cas de la polymérisation en solution aqueuse ou de la polymérisation micellaire, mais d'autres méthodes telles que la polymérisation en émulsion inverse sont également pratiquées. La polymérisation est généralement amorcée par un couple rédox générateur de radicaux tel que, par exemple, le couple persulfate (S₂O₈²⁻)/métabisulfite (S₂O₅²⁻), mais également par les amorceurs de radicaux azoïques ou peroxydiques. D'autres systèmes d'amorçage peuvent être utilisés tels que les rayons UV, les rayons X, les ultrasons, les sels de cobalt.

La copolymérisation de l'acrylamide, du méthacrylamide et de leurs dérivés en milieu précipitant, dans lequel les monomères sont solubles et le polymère précipite au cours de sa formation, est une méthode plus rarement utilisée et décrite notamment dans les brevets FR 1 508 702, GB 1 328 742 et US 3 336 269.

L'acrylamide, le méthacrylarmide et leurs dérivés peuvent également être copolymérisés avec des monomères insolubles dans l'eau, possédant une chaîne latérale hydrocarbonée hydrophobe tels que, par exemple, les acrylates ou méthacrylates d'alcools gras. Les copolymères ainsi constitués sont des épaississants associatifs, dont les groupements hydrophobes en solution aqueuse tendent à former des associations intermoléculaires créant ainsi un réseau transitoire. En solution aqueuse, la viscosité de ces polymères associatifs dépend du taux de cisaillement; en général, la solution présente un caractère pseudoplastique, c'est à dire que sa viscosité décroît avec l'augmentation du taux de cisaillement. De tels produits sont décrits dans les références-[1] à [3] dont la liste figure après les exemples de la présente demande.

L'acrylamide, le méthacrylamide et leurs dérivés, peuvent également être copolymérisés avec des monomères possédant une chaîne latérale hydrophobe perfluoroalkyle tels que, par exemple, les acrylates ou méthacrylates d'alcools fluorés. La synthèse et la caractérisation de tels polymères hydrophiles fluorés sont décrites par Thieo E. Hogen-Esch et ses collaborateurs et par d'autres auteurs dans les références [4] à [12]. Ces copolymères fluorés ont été préparés en milieu aqueux en présence d'un cosolvant tel que l'acétone [4] - [9], et plus rarement en milieu aqueux en l'absence de cosolvant [12] ou en masse [9], la réaction de polymérisation ayant été amorcée par un couple rédox précurseur de radicaux par oxydoréduction [4] - [9], par un amorceur radicalaire précurseur de radicaux par décomposition thermique [9] - [12] ou par le triphénylméthyleésium en polymérisation anionique en solution dans le tétrahydrofurane. Le brevet US 4 891 306 décrit des copolymères hydrophiles fluorés obtenus par polymérisation anionique ou cationique ; ces produits sont utilisés dans des matériaux photographiques sensibles à la lumière. DE 1 952 585 décrit un polymère perfluoré composé de 0% de monomère hydrophile non ionique, 9% d'un monomère ionique et de 80% d'un monomère perfluoré.

Dans tous les cas cités ci-dessus, les copolymères hydrophiles fluorés sont synthétisés en masse ou en milieu aqueux en présence de tensioactifs dont le but est de solubiliser à l'intérieur des micelles les monomères hydrophobes fluorés. Les tensioactifs utilisés préférentiellement sont des tensioactifs fluorés dont la chaîne latérale perfluoroalkyle est compatible avec les monomères fluorés, ce qui permet la solubilisation de ces monomères. Les polymères hydrophiles fluorés obtenus par polymérisation en milieu aqueux présentent comme caractéristique commune un poids moléculaire élevé qui conduit à des solutions aqueuses très visqueuses, d'où l'utilisation de tels produits comme agents viscosifiants. Dans beaucoup de cas, la présence de tensioactifs fluorés est gênante pour l'utilisation ultérieure des polymères, ce qui oblige à recourir à une précipitation du polymère dans un large excès de solvant, suivi d'un lavage du polymère. Cette étape de précipitation et de lavage, qui se rajoute à la synthèse, doit être réalisée avec de grandes quantités de solvants, comme par exemple les alcools, ce qui augmente le coût de fabrication et produit des effluents chargés de tensioactifs. Dans le cas de la polymérisation en milieu précipitant, utilisée dans le cadre de la présente invention, Il est beaucoup plus facile et rapide de récupérer le polymère sous forme de poudre. Bien que partant de monomères de même nature que ceux décrits ci-dessus, à savoir des dérivés de l'acrylamide ou du méthacrylamide et des monomères à chaîne latérale perfluoroalkyle, les polymères hydrophiles fluorés faisant l'objet de la présente invention se différencient des précédents par plusieurs aspects, dont les principaux sont le procédé même de préparation, la teneur en monomères fluorés incorporés dans le polymère et la nature des agents amorceurs de radicaux. Ces différences se traduisent par des comportement très différents du point de vue des propriétés applicatives.

Les polymères hydrophiles fluorés selon l'invention peuvent être par exemple utilisés en tant qu'additifs dans les émulseurs anti-incendies polyvalents, c'est à dire les émulseurs destinés à l'extinction des feux d'hydrocarbures et les feux de liquides polaires.

Des émulseurs anti-incendies contenant des polymères hydrophiles fluorés ont déjà été décrits, notamment dans les brevets FR 2 438 484, US 4 563 287 et US 4 606 832.

L'acrylamide, le méthacrylamide et leurs dérivés N-substitués, utilisés dans le cadre de la présente invention, et la méthode de polymérisation en milieu précipitant ne sont pas mentionnés dans le brevet US 4 563 287 qui, pour l'extinction des feux d'huile de cuisine, décrit des compositions non moussantes alors que les émulseurs contenant un polymère hydrophile fluoré selon la présente invention sont des compositions moussantes.

Les compositions extinctrices décrites dans le brevet US 4 606 832, également destinées à combattre les feux d'huile de cuisine, font appel à des bromofluorohydrocarbures et/ou bromochorofluorohydrocarbures ce qui n'est pas le cas dans la présente invention, et ne sont pas des émulseurs anti-incendies ayant des propriétés moussantes comme dans le cas de la présente invention.

Le brevet FR 2 438 484 qui ne fait pas mention de l'acrylamide, du méthacrylamide ou de leurs dérivés N-substitués, indique que les polymères peuvent être obtenus par polymérisation en solution. Or, la polymérisation en solution appliquée aux polymères hydrophiles fluorés selon l'invention ne conduit pas à des produits performants ; il est nécessaire de faire appel à la polymérisation en milieu précipitant.

La présente invention a donc pour objet des polymères hydrophiles fluorés obtenus par polymérisation radicalaire, en milieu précipitant, d'un mélange de monomères composé en poids de :
*(a)* jusqu'à 49 % d'au moins un monomère hydrophile non-ionique, de préférence 25 à 45 %, encore plus préférentiellement de 35 à 45 %, choisit parmi le group comprenant (i) la N-vinyl pyrrolidone-2 et ses dérivés et (ii) l'acrylamide, le méthacrylamide et leurs dérivés N-substitués de formule générale suivante:

   CH₂ - CR¹―CONR²R³ (II)

   dans laquelle R¹ représente un atome d'hydrogène ou un radical méthyle, les symboles R² et R³, identiques ou différents, représentent chacun un atome d'hydrogène ou un radical alkyle ou hydroxyalkyle contenant de 1 à 3 atomes de carbone
(*b*) 20 à 75 % d'au moins un monomère contenant un radical perfluoroalkyle, de préférence 25 à 60 %, encore plus préférentiellement de 25 à 50 % ; et
(*c*) 5 à 75 % d'un ou plusieurs monomères hydrophiles ioniques ou ionisables, de préférence 5 à 35 %, encore plus préférentiellement de 5 à 20 %.

Ces polymères possèdent des propriétés moussantes; Ils abaissent la tension superficielle des solutions aqueuses et sont particulièrement intéressants en tant qu'additifs dans les émulseurs anti-incendies polyvalents, c'est à dire les émulseurs destinés à combattre les feux d'hydrocarbures et les feux de liquides polaires. Ils sont notamment avantageux pour prévenir la reprise de l'incendie, dans le cas de la lutte contre les feux de liquide polaire.

Un quatrième monomère peut également être utilisé. Il peut s'agir notamment d'un monomère jouant le rôle d'agent de réticulation par exemple durant l'application du polymère sur l'incendie à combattre.

La méthode utilisée pour préparer ces polymères hydrophiles fluorés est la polymérisation en milieu précipitant ; elle présente l'avantage de générer des polymères de faible poids moléculaire, donc des produits faiblement visqueux, de faire appel à un solvant unique qui peut facilement être régénéré et réutilisé, et de ne pas nécessiter l'emploi de tensioactifs qui pourraient gêner dans l'application et qu'il faudrait donc extraire du milieu. Le solvant utilisé pour cette polymérisation en milieu précipitant peut être distillé puis remplacé par de l'eau ou un mélange eau / cosolvant. Le produit final se présente-alors sous la forme d'une dispersion aqueuse du polymère. En fonction des conditions opératoires telles que les teneurs relatives des divers monomères, la concentration en amorceur de radicaux, la concentration initiale totale en monomères et la température de polymérisation, il est possible d'obtenir toute une gamme de polymères selon l'invention qui se différencient d'après leur poids moléculaire, leur teneur en fluor et leur taux de charges anioniques et/ou cationiques.

Comme exemples non limitatifs de monomères hydrophiles non-ioniques (a), on peut citer :
- la N-vinyl pyrrolidone-2 et ses dérivé, tels que la N-vinyl méthyl-3 pyrrolidone-2, la N-vinyl méthyl-4 pyrrolidone-2, la N-vinyl méthyl-5 pyrrolidone-2, la N-vinyl diméthyl-3,3 pyrrolidone-2;
- l'acrylate ou méthacrylate d'éthylène glycol;
- les acrylates ou méthacrylates de polyéthylèneglycol ou d'éther de polyéthylèneglycol répondant à la formule générale :

   CH₂ = CR¹-CO (OCH₂CH₂)ₖ -OR (I)

   dans laquelle R représente un atome d'hydrogène ou un radical méthyle ou éthyle, k est un nombre entier allant de 1 à 50 et R¹ représente un atome d'hydrogène ou un radical méthyle ;
- l'acrylamide, le méthacrylamide et leurs dérivés N-substitués répondant à la formule générale suivante:

   CH₂ = CR¹―CONR²R³ (II)
dans laquelle R¹ a la même signification que ci-dessus, les symboles R² et R³, identiques ou différents, représentent chacun un atome d'hydrogène ou un radical alkyle ou hydroxyalkyle contenant de 1 à 3 atomes de carbone.

Comme exemples non limitatifs de monomères hydrophiles de formule (II), on peut citer l'acrylamide, le N-méthyl-acrylamide, le N-éthyl-acrylamide, le N,N-diméthyl-acrylamide, le N-méthyl-N-éthyl-acrylamide, le N-hydroxyméthyl-acrylamide, le N-(3-hydroxypropyl)-acrylamide, le N-(2-hydroxyéthyl)-acrylamide, le méthacrylamide, le N-méthyl-méthacrylamide, le N-éthyl-méthacrylamide, le N,N-diméthyl-méthacrylamide, le N-hydroxyméthyl-méthacrylamide, le N-(3-hydroxypropyl)-méthacrylamide et le N-(2-hydroxyéthyl)-méthacrylamide.

L'acrylamide, le méthacrylamide et leurs dérivés N-substitués décrits ci-dessus seront choisis préférentiellement et plus particulièrement l'acrylamide et le méthacrylamide.

Les monomères fluorés (b) sont des monomères comprenant un radical perfluoroalkyle, linéaire ou ramifié, contenant de 2 à 20 atomes de carbone. On choisit préférentiellement les acrylates ou méthacrylates d'alcools fluorés répondant à la formule générale suivante : 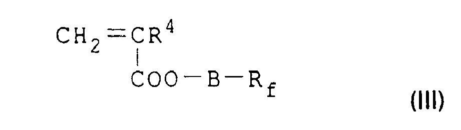 dans laquelle R_{f} représente un radical perfluoroalkyle, linéaire ou ramifié, contenant de 2 à 20, de préférence de 4 à 16 atomes de carbone, R⁴ représente un atome d'hydrogène ou un radical méthyle, B représente un enchaînement bivalent lié à O par un atome de carbone et pouvant comporter un ou plusieurs atomes d'oxygène, de soufre et/ou d'azote. On peut citer, à titre non limitatif, les acrylates ou méthacrylates des alcools fluorés répondant aux formules suivantes:

R_{f} ― (CH2)ₙ ― (X)ₚ ― (CH2)ₘ ― OH

R_{f} ― (CH2)ᵣ ― (OCH₂CH2)_{q} ― OH

R_{f} ― CH2 = CH ― (CH₂)ₘ ― OH

dans lesquelles R_{f} a la même signification que dans la formule (III), X représente un atome d'oxygène ou de soufre, ou un groupe ―COO―, ―OCO―, ―CONR⁵―, ― SO₂NR⁵― R⁵ désignant un atome d'hydrogène ou un radical méthyle ou éthyle, n représente un nombre entier allant de 0 à 20 (de préférence égal à 0 ou 2), p est égal à 0 ou 1, les symboles m, q et r, identiques ou différents, représentent chacun un nombre entier allant de 1 à 20 (de préférence égal à 2 ou 4), n n'étant pas nul si X est un atome d'oxygène ou de soufre ou un groupe ―OCO―

On utilise préférentiellement les acrylates ou méthacrylates des alcools fluorés répondant aux formules suivantes:

R_{f}―CH₂CH₂―OH

ou

R_{f}―CH₂CH₂―SO₂NR⁵―CH₂CH₂―OH

dans lesquelles R_{f} et R⁵ ont la même signification que ci-dessus.

Comme exemples de monomères hydrophiles (c) ioniques, ou ionisables par variation du pH, utilisables dans le cadre de l'invention, on peut citer à titre non limitatif :
- l'acide acrylique, l'acide méthacrylique et leurs sels de métaux alcalins ou d'ions ammonium quaternaires ;
- les dérivés mono-oléfiniques de l'acide sulfonique et leurs sels métalliques alcalins tels que, par exemple, l'éthylènesulfonate de sodium, le styrènesulfonate de sodium et l'acide 2-acrylamido-2-méthyl-propanesulfonique ;
- les halogénures de vinylpyridinium tels que, par exemple le chlorure de 4-vinylpyridinium ;
- les acrylates ou méthacrylates des aminoalcools répondant aux formules suivantes:

   HO―Y―NR⁶R⁷ ou HO―Y―N^{⊕}R⁶R⁷R⁸, A⁻

   dans lesquelles les symboles R⁶, R⁷ et R⁸, identiques ou différents, représentent chacun un radical alkyle ou hydroxyalkyle contenant 1 à 4 atomes de carbone, Y représente un radical alkylène ou hydroxyalkylène contenant de 1 à 4 atomes de carbone, et A- est un anion monovalent quelconque ;
- les acrylates ou méthacrylates des aminoalcools cycliques tels que, par exemple, le pipéridino-2-éthanol et le (pyrrolidinyl-1)-2-éthanol.

Les polymères hydrophiles fluorés selon l'invention sont préparés par polymérisation en milieu précipitant, en l'absence de tensioactif ou de tout autre agent stabilisateur.

La polymérisation en milieu précipitant permet d'accéder, suivant le choix du solvant, à des poids moléculaires beaucoup plus faibles que dans le cas de la polymérisation en solution aqueuse. Ainsi, il n'est pas nécessaire de faire appel à des agents de transfert tels que les alkyl mercaptans pour réguler la longueur des chaînes ; cet avantage peut être mis à profit si l'on veut des produits ayant des faibles poids moléculaires, donc des produits dont les solutions aqueuses sont faiblement visqueuses. L'obtention de faibles poids moléculaires pour les Polymères hydrophiles fluorés permet de préparer des solutions aqueuses de faible viscosité; ce point est important pour l'utilisation des polymères dans les émulseurs anti-incendies polyvalents où, pour des raisons de mise en oeuvre, on recherche préférentiellement des faibles viscosités.

La réaction de polymérisation a lieu au sein d'un solvant organique dans lequel les monomères et l'amorceur radicalaire sont parfaitement solubles et dans lequel le polymère obtenu est insoluble, de sorte qu'il précipite au cours de sa formation. Le solvant de polymérisation possède préférentiellement une chaîne hydrocarbonée courte comme l'acétonitrile et les alcools inférieurs. Le choix du solvant de polymérisation dépend de la nature des monomères (a), (b) et (c), il est indispensable qu'en début de réaction tous les réactifs soient parfaitement solubles dans le solvant à une température correspondant à celle du début de la polymérisation. La concentration totale des monomères dans le solvant est avantageusement comprise entre 100 et 500 g/litre, de préférence entre-150 et 350 g/litre. Le solvant est choisi de préférence parmi les alcools inférieurs contenant de 1 à 4 atomes de carbone tels que, par exemple, le méthanol, l'éthanol, l'isopropanol ou le tertiobutanol. La réaction peut se dérouler en batch ou en coulée, les monomères (a), (b) et (c) pouvant être introduits indépendamment dans le réacteur à des moments différents.

L'amorceur radicalaire peut être un amorceur de type azoïque tel que, par exemple, l'azo-bis-isobutyronitrile ou l'acide 4,4'-azo-bis-cyanopentanoïque, ainsi que leurs dérivés possédant une chaîne latérale hydrocarbonée ou perfluoroalkylée. La préparation d'amorceurs azoïques possédant une chaîne perfluoroalkylée est décrite dans la référence [13].

L'amorceur peut aussi être de type peroxyde tel que, par exemple, le peroxy dicarbonate de dicyclohexyle, le peroxyde de benzoyle ou le peroxyde de di-tertiobutyle. Il peut s'agir également d'un perester possédant une chaîne latérale hydrocarbonée ou perfluoroalkylée. La préparation et l'utilisation d'amorceurs perfluoroalkyl peresters est décrite dans les références [14] et [15].

La concentration de l'initiateur peut varier de 0,1 à 10 % molaire par rapport au nombre total de moles de monomères, mais plus particulièrement entre 0,6 et 2 %. En fonction du type d'amorceur radicalaire utilisé et du point d'ébullition du solvant, la température de polymérisation est comprise entre 50 et 100°C, de préférence entre 70 et 90°C. La réaction peut être, par exemple, réalisée au reflux du solvant ; dans ce cas, le réfrigérant condense et renvoie le solvant sous forme liquide dans le milieu réactionnel. L'addition de l'amorceur radicalaire peut être effectuée en une seule fois au début de la réaction, mais on préfère l'ajouter en plusieurs fractions ou bien en coulée car cela permet une meilleure incorporation du monomère fluoré dans le polymère. Il est préférable de mettre en oeuvre l'amorceur de radicaux déjà en solution et utiliser dans ce cas le solvant de la réaction.

En fin de réaction, le polymère hydrophile fluoré selon l'invention peut être récupéré sous forme solide par filtration. Le solvant de réaction peut aussi être retiré du milieu réactionnel par évaporation et remplacé par de l'eau de façon à obtenir le polymère selon l'invention sous forme de solution aqueuse.

Les polymères hydrophiles fluorés selon l'invention abaissent la tension superficielle des solutions aqueuses ; ils ont un bon pouvoir moussant et peuvent, par exemple, être utilisés en tant qu'additifs dans les émulseurs anti-incendies polyvalents, c'est-à-dire les émulseurs anti-incendies destinés à combattre les feux d'hydrocarbures tels que les essences, les huiles, le gazole, le fuel, l'heptane, l'hexane, le cyclohexane, ou les feux de liquides polaires tels que les alcools (par exemple le méthanol, l'éthanol et l'isopropanol), les cétones (par exemple la diméthylcétone et la méthylisobutyl cétone), les esters (par exemple l'acétate de n-butyle) et les éthers (par exemple le méthyltertiobutyl éther).

Les émulseurs anti-incendies sont des compositions liquides destinées à combattre les feux de liquides combustibles (hydrocarbures et/ou liquides polaires). Au moment de l'utilisation, les émulseurs sont dilués dans l'eau de ville ou l'eau de mer, généralement à une concentration en volume de 3 % (c'est à dire 3 volumes d'émulseur pour 97 volumes d'eau) ou 6 % (6 volumes d'émulseur pour 94 volumes d'eau) mais aussi, et plus rarement, 1 % (1 volume d'émulseur pour 99 volumes d'eau). Après dilution des émulseurs, la quantité de matières actives nécessaire pour satisfaire aux performances extinctrices minimales requises étant identique dans tous les cas de dilution, les émulseurs diluables à 3 % sont donc deux fois plus concentrés que ceux diluables à 6 %; ils permettent aux utilisateurs de stocker des quantités moindres d'émulseur, de gagner de la place et de réduire leurs frais de stockage. La solution moussante est obtenue par dilution à l'eau de l'émulseur. Cette solution moussante passe au travers d'une lance anti-incendies où se produit une agitation mécanique avec incorporation d'air, ce qui génère une mousse extinctrice utilisée pour combattre les feux de liquides combustibles.

Lorsque les polymères selon l'invention sont intégrés dans les émulseurs, ils améliorent la stabilité des mousses extinctrices sur liquide polaire et donc leur performance extinctrice sur ces types de feux. Leur teneur dans les émulseurs peut aller généralement de 0,1 à 10 % en poids et de préférence de 0,2 à 5 % en poids.

Les émulseurs dans lesquels les polymères hydrophiles fluorés peuvent être incorporés sont de deux types, en fonction de l'origine de leur base moussante. On distingue les émulseurs synthétiques dont la base moussante est constituée d'au moins un agent tensioactif hydrocarboné et les émulseurs protéiniques dont la base moussante est constituée d'un hydrolysat de protéines animales. Ces deux types d'émulseurs peuvent contenir, selon leur destination un ou plusieurs agents tensioactifs fluorés, un ou plusieurs co-solvants stabilisateurs de mousse, un polymère hydrophile à haut poids moléculaire du type polysaccharide à caractère thixotrope et alcoophobe, un agent antigel, un agent anticorrosion, un conservateur, un stabilisateur de pH, des sels minéraux dont le cation est divalent comme, par exemple, l'ion magnésium ou l'ion calcium.

Les émulseurs anti-incendies polyvalents contenant un polymère hydrophile selon l'invention sont utilisés pour combattre les feux d'hydrocarbures et de liquides polaires. Leurs performances peuvent être évaluées au moyen des tests suivants :

### Efficacité extinctrice sur liquide polaire

On verse 150 ml d'acétone dans un récipient métallique circulaire de 12 cm de diamètre intérieur. D'autre part, on prépare une solution aqueuse composée de l'émulseur dilué à 3 ou 6 % dans l'eau de ville. On dispose d'un agitateur rotatif composé d'un moteur et d'une tige métallique à l'extrémité de laquelle sont fixées des pales qui produisent une action mécanique lorsque la tige est en rotation; la vitesse de rotation est réglable de 0 à 2800 t/min. La tige est introduite au fond d'un récipient cylindrique muni d'un orifice d'entrée situé au fond et d'un orifice de sortie situé au sommet. Une pompe doseuse transvase par l'orifice d'entrée la solution aqueuse au fond du récipient cylindrique; au contact des pales en rotation il se produit de la mousse qui s'évacue, au fur et à mesure de sa formation, par l'orifice de sortie. Le débit de la pompe et la vitesse de rotation de la tige sont réglés de telle sorte que l'on produise de la mousse en continu avec un débit fixe de mousse égal à 36 ± 2 g/min, (sauf indication contraire).

Lorsque le débit de mousse est stabilisé, on enflamme l'acétone. Après combustion de l'acétone pendant 90 secondes, on déverse la mousse à l'intérieur du récipient métallique par un point unique situé sur la circonférence. Lorsque l'acétone est éteinte complètement, on note le temps d'extinction. La quantité de mousse déversée pour éteindre le foyer est calculée en multipliant le temps par le débit. Les émulseurs les plus performants sur liquide polaire sont ceux pour lesquels la quantité de mousse déversée est la plus faible possible.

### Résistance de la mousse au réallumage

Ce paramètre peut être évalué si le temps d'extinction est inférieur à 120s. Dans ce cas, la mousse est déversée sur l'acétone même après l'extinction du foyer. La coulée de mousse dure au total 120s. 60s après l'arrêt du déversement de la mousse, on enflamme le contenu d'un pot de réallumage (récipient métallique d'un diamètre de 55 mm et d'une hauteur de 40 mm rempli d'une hauteur de 20 mm d'acétone). On place celui-ci au centre du récipient métallique décrit précédemment, la surface du combustible contenu dans ledit récipient étant maintenant recouverte de mousse. On note le temps au bout duquel les flammes détruisent la mousse et s'étendent de façon durable sur la surface du récipient métallique. Plus ce temps est important, meilleure est la capacité de la mousse à empêcher la reprise du feu.

### EXEMPLES

Dans les exemples suivants qui illustrent l'invention sans la limiter, les pourcentages indiqués sont exprimés en poids et certains constituants utilisés sont désignés, pour simplifier, par les abréviations suivantes:
**A1 =** acrylate de 2-(perfluorooctyl)éthyle de formule :

CH₂ = CH―COO―C₂H₄―(CF₂)₇CF₃

**A2 =** mélange d'acrylates de 2-(perfluoroalkyl)éthyle de formule :

CH₂ = CH―COO―C₂H₄―(CF₂)ₙCF₃

ayant la-composition pondérale suivante :

| n | % |
|---|---|
| 5 | 1 |
| 7 | 63 |
| 9 | 25 |
| 11 | 9 |
| 13 | 3 |

**A3** = mélange de méthacrylates de 2-(perfluoroalkyl)éthyle de formule :

CH₂ = C(CH₃) ―COO―C₂H₄―(CF₂)ₙCF₃

ayant la même composition pondérale que A₂
**B1** = acide acrylique de formule :

CH₂ = CH―COOH

**B2** = chlorure de N-[2-(acryloyloxy)éthyl]-N,N,N-triméthylammonium de formule :

CH₂ = CH―COO―C₂H₄―N^{⊕} (CH₃)₃, Cl⁻

**B3** = acide 2-acrylamido-2-méthylpropane sulfonique de formule :

CH2 = CH - C(O) - NH - C(CH3)2 - CH2 SO3H

**C1** = solution hydroalcoolique à 27 % de la bétaïne fluorée de formule :

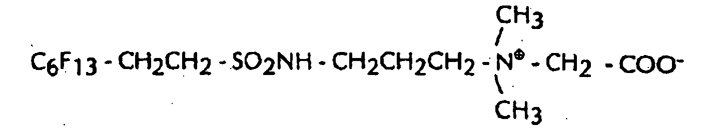

### EXEMPLES 1 à 2

### a) Synthèse :

Dans un réacteur de 1 litre équipé d'un thermomètre, d'un réfrigérant à reflux, d'une arrivée d'azote et d'un agitateur mécanique, on incorpore 225 ml d'isopropanol. On met en route l'agitation puis on porte le milieu réactionnel à la température de 80°C, sous circulation d'azote. D'autre part, on prépare les solutions S1 et S2 figurant dans le tableau suivant.

| | | **Exemple 1** | **Exemple 2** |
|---|---|---|---|
| Solution S1 | Acrylamide | 27g (0,38 mole) | 27g (0,38 mole) |
| | B1 | 7,4g (0,10 mole) | 7,4g (0,10 mole) |
| | A3 | 20g (0,03 mole) | 30g (0,05 mole) |
| | Isopropanol | 195g (250 ml) | 195g (250 ml) |
| Solution 52 | Azo-bis-isobutyronitrile | 2,5g (0,015 mole) | 2,5g (0,015 mole) |
| | N-méthylpyrolidone | 25g | 25g |
| | Isopropanol | 19,5g (25ml) | 19,5g (25ml) |

S1 et S2 sont introduits simultanément dans le réacteur durant un temps de 3h, suivi pendant 30 minutes par l'introduction de la solution S2 seule.

Après lavage du polymère ainsi obtenu à l'isopropanol et à l'acétone, celui-ci est séché 14H à 40°C puis dissout dans un mélange 70/30 % en poids eau / 1,2-propanediol. La dispersion obtenue contient 30% de polymère hydrosoluble. Le pH de cette dispersion est ajusté à 7,5 à l'aide de diéthanolamine.

### b) Evaluation en émulseur anti-incendies synthétique :

On prépare une série d'émulseurs anti-incendies synthétiques en procédant, pour chacun d'eux de la manière suivante :

A 50 g d'une solution aqueuse à 1 % de polysaccharide; préparée par addition dans l'eau à température ambiante du polysaccharide Actigum CX9YL1 de la société System Bio-industries sous forme de poudre sous forte agitation, on ajoute une masse de solution de polymère hydrosoluble correspondant à 0,76 g du polymère hydrophile fluoré préparé ci-dessus, 15 g de butyl diglycol et 5 g de solution C1. Puis on complète à 100 g par addition d'eau. On obtient un émulseur anti-incendies que l'on dilue à 3 % avec de l'eau de ville. La solution résultante, soumise aux tests décrits précédemment, présente les caractéristiques données dans le tableau suivant :

| **Polymère de l'exemple** | **Efficacité extinctrice sur acétone** | | |
|---|---|---|---|
| | **Temps d'extinction**^{**(a)**} | **Masse de mousse déversée** | **Temps de réallumage** |
| **1** | **89s** | **59g** | **153s** |
| **2** | **82s** | **55g** | **187s** |

| | | | |
|---|---|---|---|
| (a) Pour le test d'efficacité extinctrice sur acétone, débit de la mousse fixé à 40g/mn. | | | |

### EXEMPLE 3

### a) Synthèse :

On répète l'exemple 1 en remplaçant B1 par 21,27g de B3

### b) Evaluation en émulseur anti-incendies synthétique :

On procède comme à l'exemple 1. Les résultats des tests sont les suivants :
Temps d'extinction : 92s (débit de mousse 40g/mn)
Masse de mousse déversée : 61 g
Temps de réallumage : 168s

### EXEMPLES 4 et 5

### a) Synthèse :

On procède comme à l'exemple 1, mais les compositions des solutions sont données dans le tableau suivant :

| | | **Exemple 4** | **Exemple 5** |
|---|---|---|---|
| Solution S1 | Acrylamide | 27g (0,38 mole) | 29,2g (0,41 mole) |
| | B1 | 5,2g (0,07 mole) | 5,2g (0,07 mole) |
| | B2 | 6g (0,03 mole) | 0 |
| | A3 | 30g (0,05 mole) | 30g (0,05 mole) |
| | Isopropanol | 195g (250 ml) | 195g (250 ml) |
| Solution S2 | Azo-bis-isobutyronitrile | 2,5g (0,015 mole) | 2,5g (0,015 mole) |
| | N-méthylpyrolidone | 25g | 25g |
| | Isopropanol | 16,5g (25ml) | 16,5g (25ml) |

### b) Evaluation en émulseur anti-incendies synthétique :

On prépare deux émulseurs anti-incendies synthétiques en procédant comme pour l'exemple 1. Les résultats des tests sont rassemblés dans le tableau suivant :

| **Polymère de l'exemple** | **Efficacité extinctrice sur acétone** | | |
|---|---|---|---|
| | **Temps d'extinction**^{**(a)**} | **Masse de mousse déversée** | **Temps de réallumage** |
| **4** | **57s** | **38g** | **198s** |
| **5** | **76s** | **52g** | **190s** |

| | | | |
|---|---|---|---|
| (a) Pour le test d'efficacité extinctrice sur acétone, débit de la mousse fixé à 40g/mn. | | | |

### EXEMPLES 6 et 7

### a) Synthèse :

On procède comme à l'exemple 1, mais les compositions des solutions sont données dans le tableau suivant :

| | | **Exemple 6** | **Exemple 7** |
|---|---|---|---|
| Solution S1 | Acrylamide | 27g (0,38 mole) | 29,2g (0,41 mole) |
| | B1 | 5,2g (0,07 mole) | 5,2g (0,07 mole) |
| | B2 | 6g (0,03 mole) | 6g (0,03 mole) |
| | A2 | 29,3g (0,05 mole) | 29,3g (0,05 mole) |
| - | solvant : | Isopropanol 195 g (250 ml) | t-butanol 196g (250 ml) |
| Solution 52 | Azo-bis-isobutyronitrile | 2,5g (0,015 mole) | 2,5g (0,015 mole) |
| | N-méthylpyrolidone | 25g | 25g |
| | solvant : | Isopropanol 19,5 (25ml) | t-butanol 19,5 (25ml) |

Dans le cas de l'exemple 7, on utilise du t-butanol à la place des 225 ml d'isopropanol mentionnés dans l'exemple 1.

### b) Evaluation en émulseur anti-incendies synthétique :

En procédant comme à l'exemple 1, on obtient les résultats suivants :

| **Polymère de l'exemple** | **Efficacité extinctrice sur acétone** | | |
|---|---|---|---|
| | **Temps d'extinction**^{**(a)**} | **Masse de mousse déversée** | **Temps de réallumage** |
| **6** | **72s** | **48g** | **182s** |
| **7** | **150s** | **100g** | **-** |

| | | | |
|---|---|---|---|
| (a) Pour le test d'efficacité extinctrice sur acétone, débit de la mousse fixé à 40g/mn. | | | |

### EXEMPLE 8

### a) Synthèse :

Dans un réacteur de 5 litres, équipé d'un thermomètre, d'une arrivée d'azote, d'un agitateur mécanique et d'une trappe de Dean Starck remplie d'isopropanol surmontée d'un réfrigérant à reflux, on incorpore 600 ml d'isopropanol. On met en route l'agitation puis on porte le milieu réactionnel à la température de 80°C, sous circulation d'azote.

D'autre part, on prépare les solutions suivantes :

| | |
|---|---|
| Solution S1 : | - 158,32 g (2,22 mole) d'acrylamide |
| | - 30,36g (0,42 mole) de B1 |
| | - 35g (0,18 mole) de B2 |
| | - 175,20g (0,30 mole) de A3 |
| | - 847,8g (1080ml) d'isopropanol |
| Solution S2 : | - 29,4g d'azo-bis-isobutyronitrile |
| | - 400ml d'un mélange isopropanol / N-méthylpyrolidone, 50/50 %. |

La solution S1 et 200ml de la solution S2 sont coulées en 3h. Le milieu réactionnel est ensuite maintenu sous agitation, sous azote et à la température de reflux de l'isopropanol durant 2H.

On distille 620ml d'isopropanol. 600 ml d'eau distillée sont chauffés à 70°C. Les 400 premiers ml sont ajoutés par portions de 80 ml. Au total 730 ml d'azéotrope sont retirés du réacteur. 250g de 1,2-propanediol sont ajoutés au milieu réactionnel. L'extrait sec de la dispersion est ajusté à 31,5% par ajout d'eau et le pH à 6,7 par ajout de diéthanol amine.

### b) Evaluation en émulseur anti-incendies synthétique :

En procédant comme à l'exemple 1, on obtient les résultats suivants :
Temps d'extinction : 63s (débit de mousse 40g/mn)
Masse de mousse déversée : 42g
Temps de réallumage : 180s

### REFERENCES

[1] A. Hill, F. CANDAU etJ. Selb - *Macromolécules (1993), 26, p.4521.*
[2] C.L. McCormick, T. Nonaka et C.B. Johnson - *Polymer (1988), 29, p.731.*
[3] K.C. Dowling et J.K. Thomas - *Macromolécules (1990), 23*, *p.1059.*
[4] Y.X. Zhang, A.H. Da, T.E. Hogen-Esch et G.B. Butler - ACS - *Symp. Ser. (1991), 467, p.159*.
[5] Y.X. Zhang, A.H. Da, T.E. Hogen-Esch - *Journal or Polymer Science; Part C: Polymer Letters (1990), vol. 28*, *p.213.*
[6] F.S. Hwang et T.E. Hogen-Esch - *Polymer Preprints (1993), 34 (1)*, *p.405.*
[7] T.E. Hogen-Esch, M. Yassini, Y.-X. Zhang, F. Huang, E.J. Amis et T. Seery - *Polymer Preprints (1990), 31 (2), p.460.*
_{[8]} Y.X. Zhang, A.H. Da, T.E. Hogen-Esch et G.B. Butler *Journal or Polymer Science; Part A: Polymer Chemistry (1992), vol. 30,* p. *1383.*
[9] X. Xie et T.E.-Hogen-Esch - Macromolecules *(1996), 29*, *p.1734.*
[10] M. Yassini et T.E. Hogen-Esch - *Polymer Preprints (1994), 35 (1), p.478.*
[11] Y.X. Zhang, A.H. Da et T.E. Hogen-Esch - *Polymer Preprints (1989), 30 (2)*, *p.338*.
[12] F.A. Abdel-Mohdy, A. waly, A. Higazy et A. Hebeish - *Pigment & Resein Technology (1994), 23 (2)*, *p.10.*
[13] J.M. Bessiere, B. Boutevin, O. Loubet - *Polymer Bulletin (1993), 30, p.545.*
[14] H. Sawada - *Review on Heteroatom Chemistry (1993), 8*, *p.205.*
[15] H. Sawada, Y. Minoshima, T. Hiromitsu - *Journal of Fluorine Chemistry (1993), 65 (1-2), p.169.*

## Revendications

1. Polymères hydrophiles fluorés obtenus par polymérisation radicalaire, en milieu précipitant, d'un mélange de monomères composé en poids de :
(a) jusqu' à 49 % d'au moins un monomère hydrophile non-ionique, de préférence 25 à 45 %, encore plus préférentiellement de 35 à 45 %, choisit parmi le group comprenant (i) la N-vinyl pyrrolidone-2 et ses dérivés et (ii) l'acrylamide, le méthacrylamide et leurs dérivés N-substitués de formule générale suivante:
CH₂ = CR¹―CONR²R³ (II)
dans laquelle R¹ représente un atome d'hydrogène ou un radical méthyle, les symboles R² et R³, identiques ou différents, représentent chacun un atome d'hydrogène ou un radical alkyle ou hydroxyalkyle contenant de 1 à 3 atomes de carbone
*(b)* 20 à 75 % d'au moins un monomère contenant un radical perfluoroalkyle, de préférence 25 à 60 %, encore plus préférentiellement de 25 à 50 % ; et
(*c*) 5 à 75 % d'un ou plusieurs monomères hydrophiles ioniques ou ionisables, de préférence 5 à 35 %, encore plus préférentiellement de 5 à 20 %.

2. Polymère hydrophile fluoré selon la revendication 1, dans lequel le ou les monomères fluorés (b) sont des monomères acryliques ou méthacryliques répondant à la formule générale suivante : 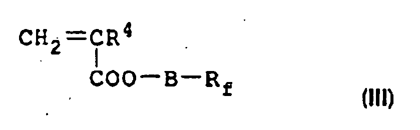 dans laquelle R_{f} représente un radical perfluoroalkyle, linéaire ou ramifié, contenant de 2 à 20, de préférence de 4 à 16 atomes de carbone, B représente un enchaînement bivalent lié à O par un atome de carbone et pouvant comporter un ou plusieurs atomes d'oxygène, de soufre et/ou d'azote et R⁴ représente un atome d'hydrogène ou un radical méthyle.

3. Polymère hydrophile fluoré selon la revendication 2 , dans lequel 8 est un radical divalent CH₂CH₂ ou CH₂CH₂NR⁵SO₂CH₂CH₂ dans lequel R⁵ représente un atome d'hydrogène ou un radical méthyle ou éthyle.

4. Polymère hydrophile fluoré selon la revendication 1 , dans lequel le ou les monomères hydrophiles ioniques ou ionisables sont choisis parmi :
- l'acide acrylique, l'acide méthacrylique et leurs sels de métaux alcalins ou d'ions ammonium quaternaires;
- les dérivés mono-oféfiniques de l'acide sulfonique et leurs sels métalliques alcalins tels que, par exemple, l'éthylènesulfonate de sodium, le styrènesulfonate de sodium et l'acide 2-acrylamido-2-méthyl-propanesulfonique ;
- les acrylates ou méthacrylates des aminoalcools répondant aux formules suivantes :
HO―Y―NR⁶R⁷ ou HO―Y―N^{⊕} R⁶R⁷R⁸, A⁻
dans lesquelles les symboles R⁶, R⁷ et R⁸, identiques ou différents, représentent chacun un radical alkyle ou hydroxyalkyle contenant 1 à 4 atomes de carbone, Y représente un radical alkylène-ou hydroxyalkylène contenant de 1 à 4 atomes de carbone, et A⁻ est un anion monovalent quelconque.

5. Polymère hydrophile fluoré selon l'une des revendications 1 à 4, préparé par polymérisation radicalaire en milieu précipitant dans l'acétonitrile ou dans un alcool contenant de 1 à 4 atomes de carbone.

6. Polymère hydrophile fluoré selon la revendication 5, préparé par polymérisation radicalaire en milieu précipitant dans l'éthanol, le t-butanol ou l'isopropanol.

7. Polymère hydrophile fluoré selon l'une des revendications 1 à 6, en dispersion dans l'eau ou dans un mélange eau/cosolvant.

8. Utilisation d'un polymère hydrophile fluoré selon l'une des revendications à 7 dans un émulseur anti-incendies polyvalent.

9. Emulseur anti-incendies polyvalent comprenant en poids de 0,1 à 10 %, de préférence de 0,2 à 5 %, d'un polymère hydrophile fluoré selon l'une des revendications 1 à 7.

## Claims

1. Hydrophilic fluoropolymers obtained by radical polymerisation, in a precipitating medium, of a mixture of monomers composed of:
(a) up to 49 % by weight, preferably from 25 to 45 % by weight, even more preferably from 35 to 45 % by weight, of at least one non-ionic hydrophilic monomer selected from the group comprising (i) N-vinyl-2-pyrrolidone and the derivatives thereof and (ii) acrylamide, methacrylamide and the N-substituted derivatives thereof having the following general formula:
CH₂ = CR¹-CONR²R³ (II)
wherein R¹ represents a hydrogen atom or a methyl radical, the symbols R² and R³, which are the same or different, each representing a hydrogen atom or an alkyl or hydroxyalkyl radical containing from 1 to 3 carbon atoms
(b) from 20 to 75 % by weight, preferably from 25 to 60 % by weight, even more preferably from 25 to 50 % by weight, of at least one monomer containing a perfluoroalkyl radical; and
(c) from 5 to 75 % by weight, preferably from 5 to 35 % by weight, even more preferably from 5 to 20 % by weight, of one or more ionic or ionisable hydrophilic monomers.

2. Hydrophilic fluoropolymer according to claim 1, wherein the fluorinated monomer or monomers (b) are acrylic or methacrylic monomers corresponding to the following general formula: 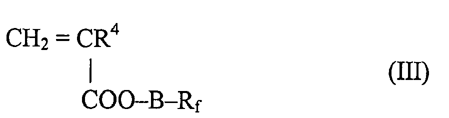 wherein R_{f} represents a linear or branched perfluoroalkyl radical containing from two to 20, preferably from 4 to 16, carbon atoms, B represents a bivalent chain which is bound to O by a carbon atom and may comprise one or more oxygen, sulphur and/or nitrogen atoms, and R⁴ represents a hydrogen atom or a methyl radical.

3. Hydrophilic fluoropolymer according to claim 2, wherein B is a divalent radical CH₂CH₂ or CH₂CH₂NR⁵SO₂CH₂CH₂, wherein R⁵ represents a hydrogen atom or a methyl or ethyl radical.

4. Hydrophilic fluoropolymer according to claim 1, wherein the ionic or ionisable hydrophilic monomers are selected from among:
- acrylic acid, methacrylic acid and the alkali metal or quaternary ammonium ion salts thereof;
- the mono-olefinic derivatives of sulphonic acid and the alkali metal salts thereof such as, for example, sodium ethylene sulphonate, sodium styrene sulphonate and 2-acrylamido-2-methyl-propane sulphonic acid;
- the acrylates or methacrylates of the amino alcohols corresponding to the following formulae:
HO - Y-NR⁶R⁷ or HO - Y-N⁺R⁶R⁷R⁸, A⁻
wherein the symbols R⁶, R⁷ and R⁸, which are the same or different, each represent an alkyl or hydroxyalkyl radical containing from 1 to 4 carbon atoms, Y represents an alkylene or hydroxyalkylene radical containing from 1 to 4 carbon atoms, and A⁻ is an arbitrary monovalent anion.

5. Hydrophilic fluoropolymer according to any one of claims 1 to 4, prepared by radical polymerisation in a precipitating medium in acetonitrile or in alcohol containing from 1 to 4 carbon atoms.

6. Hydrophilic fluoropolymer according to claim 5, prepared by radical polymerisation in a precipitating medium in ethanol, t-butanol or isopropanol.

7. Hydrophilic fluoropolymer according to any one of claims 1 to 6, dispersed in water or in a water/cosolvent mixture.

8. Use of a hydrophilic fluoropolymer according to any one of claims 1 to 7 in a polyvalent fire extinguishing foam concentrate.

9. Polyvalent fire extinguishing foam concentrate comprising from 0.1 to 10 % by weight, preferably from 0.2 to 5 % by weight, of a hydrophilic fluoropolymer according to any one of claims 1 to 7.

## Patentansprüche

1. Fluorierte hydrophile Polymere, die durch radikalische Polymerisation, in einem Fällungsmittel, eines Monomerengemischs mit den folgenden Gewichtsanteilen erhalten wurden:
a) bis zu 49%, vorzugsweise 25 bis 45%, stärker bevorzugt 35 bis 45%, von wenigstens einem hydrophilen nichtionischen Monomer, ausgewählt aus der Gruppe, die Folgendes umfasst: i) N-Vinylpyrrolidon-2 und seine Derivate und ii) Acrylamid, Methacrylamid und deren Derivate, N-substituiert, der folgenden allgemeinen Formel:
CH₂=CR¹-CONR²R³ (II)
wobei R¹ ein Wasserstoffatom oder ein Methylradikal repräsentiert, die Symbole R² und R³, gleich oder unterschiedlich, jeweils ein Waserstoffatom oder ein Alkyl- oder Hydroxyalkylradikal mit 1 bis 3 Kohlenstoffatomen repräsentieren;
b) 20 bis 75%, vorzugsweise 25 bis 60%, stärker bevorzugt 25 bis 50%, von wenigstens einem Monomer, das ein Perfluoralkylradikal enthält; und
c) 5 bis 75%, vorzugsweise 5 bis 35%, stärker bevorzugt 5 bis 20%, von einem oder mehreren hydrophilen ionischen oder ionisierbaren Monomer(en).

2. Fluoriertes hydrophiles Polymer nach Anspruch 1, in dem das oder die fluorierte(n) Monomer(e) (b) (ein) Acryl- oder Methacrylmonomer(e) gemäß der folgenden allgemeinen Formel ist/sind: 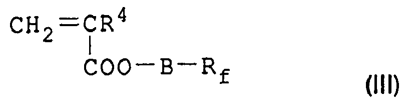 wobei R_{f} ein lineares oder verzweigtes Perfluoralkylradikal mit 2 bis 20, vorzugsweise 4 bis 16 Kohlenstoffatome repräsentiert, B eine zweiwertige Kette repräsentiert, die durch ein Kohlenstoffatom mit O verbunden ist und ein oder mehrere Sauerstoff-, Schwefel- und/oder Stickstoffatome aufweisen kann, und R⁴ ein Wasserstoffatom oder ein Methylradikal repräsentiert.

3. Fluoriertes hydrophiles Polymer nach Anspruch 2, in dem B ein zweiwertiges Radikal CH₂CH₂ oder CH₂CH₂NR⁵SO₂CH₂CH₂ ist, in dem R⁵ ein Wasserstoffatom oder ein Methyl- oder Ethylradikal repräsentiert.

4. Fluoriertes hydrophiles Polymer nach Anspruch 1, in dem das oder die hydrophile(n) ionische(n) oder ionisierbare(n) Monomer(e) ausgewählt ist/sind aus:
- Acrylsäure, Methacrylsäure und deren Salze von Alkalimetall oder von quaternären Ammoniumionen;
- Sulfonsäure-Monoolefinderivate und deren Alkalimetallsalze, wie z.B. Natriumethylensulfonat, Natriumstyrolsulfonat und 2-Acrylamido-2-methylpropansulfonsäure;
- Acrylate oder Methacrylate von Aminoalkoholen gemäß den folgenden Formeln:
HO-Y-NR⁶R⁷ oder HO-Y-N⁺R⁶R⁷R⁸, A⁻
wobei die Symbole R⁶, R⁷ und R⁸, gleich oder unterschiedlich, jeweils ein Alkyl- oder Hydroxyalkylradikal mit 1 bis 4 Kohlenstoffatomen repräsentieren, Y ein Alkylen- oder Hydroxyalkylenradikal mit 1 bis 4 Kohlenstoffatomen und A- ein beliebiges einwertiges Anion repräsentieren.

5. Fluoriertes hydrophiles Polymer nach einem der Ansprüche 1 bis 4, hergestellt durch radikalische Polymerisation in einem Fällungsmittel in Acetonitril oder in einem Alkohol mit 1 bis 4 Kohlenstoffatomen.

6. Fluoriertes hydrophiles Polymer nach Anspruch 5, hergestellt durch radikalische Polymerisation in einem Fällungsmittel in Ethanol, t-Butanol oder Isopropanol.

7. Fluoriertes hydrophiles Polymer nach einem der Ansprüche 1 bis 6 in Dispersion in Wasser oder in einem Gemisch aus Wasser und Co-Solvent.

8. Verwendung eines fluorierten hydrophilen Polymers nach einem der Ansprüche 1 bis 7 in einem mehrwertigen Feuerlöschschaum.

9. Mehrwertiger Feuerlöschschaum, der 0,1 bis 10 Gew.-%, vorzugsweise 0,2 bis 5 Gew.-%, eines fluorierten hydrophilen Polymers nach einem der Ansprüche 1 bis 7 enthält.
